# EUROPÄISCHE PATENTSCHRIFT

(11) **EP 3 451 215 B1**
(45) Veröffentlichungstag und Bekanntmachung des Hinweises auf die Patenterteilung: **18.12.2019**
(21) Anmeldenummer: 17188151.9
(22) Anmeldetag: 28.08.2017
(51) Int. Cl.: G06F 21/31, G06F 21/57, G06F 21/71

(54) **HARDWAREEINRICHTUNG UND VERFAHREN ZUM BETREIBEN UND HERSTELLEN EINER HARDWAREEINRICHTUNG**
HARDWARE DEVICE AND METHOD FOR OPERATING AND PRODUCING A HARDWARE DEVICE
DISPOSITIF MATÉRIEL ET PROCÉDÉ DE FONCTIONNEMENT ET DE FABRICATION D'UN DISPOSITIF MATÉRIEL

(43) Veröffentlichungstag der Anmeldung: 06.03.2019
(73) Patentinhaber: Siemens Aktiengesellschaft, 80333 München (DE)
(72) Erfinder: Falk, Rainer, 85586 Poing (DE); Feist, Christian Peter, 80689 München (DE); Zwanzger, Johannes, 85579 Neubiberg (DE)

(56) Entgegenhaltungen:
- CN-A- 102 045 449
- US-A1- 2009 089 569
- US-A1- 2016 179 554

## Beschreibung

Die vorliegende Erfindung betrifft eine Hardwareeinrichtung, ein Verfahren zum Betreiben einer Hardwareeinrichtung und ein Verfahren zum Herstellen einer Hardwareeinrichtung.

Eine Hardwareeinrichtung, wie zum Beispiel ein industrielles Steuergerät, wird häufig gegen Angriffe oder Manipulationen durch unbefugte Nutzer geschützt. Der Schutz der Hardwareeinrichtung kann auch Integritätsschutz genannt werden. Der Integritätsschutz der Hardwareeinrichtung ist häufig nicht veränderbar auf der Hardwareeinrichtung konfiguriert.

Das Dokument US 2009/0089569 A1 offenbart ein System, welches ein Betriebssystem auf mehrere Arten hochfahren kann, um Benutzern einen schnellen Zugriff zu bestimmten Funktionalitäten, Sicherheiten und Applikationen eines mobilen Geräts zu ermöglichen.

Das Dokument US 2016/0179554 A1 offenbart eine Einrichtung zum Initialisieren einer Plattform. Ferner offenbart das Dokument CN 102 045 449 A eine Multi-Betriebssystem-Umgebung für ein Smartphone.
Vor diesem Hintergrund besteht eine Aufgabe der vorliegenden Erfindung darin, ein verbessertes Verfahren zum Betreiben einer Hardwareeinrichtung zu schaffen. Eine weitere Aufgabe besteht darin, eine verbesserte Hardwareeinrichtung bereitzustellen. Zudem soll ein verbessertes Verfahren zum Herstellen einer Hardwareeinrichtung bereitgestellt werden.

Diese Aufgaben werden durch ein Verfahren zum Betreiben einer Hardwareeinrichtung gemäß Anspruch 1 sowie durch eine Hardwareeinrichtung gemäß Anspruch 8 gelöst. Aspekte der Erfindung sind in den Unteransprüchen beschrieben.

In Ausführungsformen wird ein Verfahren zum Betreiben einer Hardwareeinrichtung, die zum Durchführen von mehreren unterschiedlichen Funktionen geeignet ist, vorgeschlagen. Das Verfahren umfasst:
Speichern, in der Hardwareeinrichtung, von mehreren Integritätsschutzprofilen für die Hardwareeinrichtung, wobei jedes Integritätsschutzprofil einer der mehreren unterschiedlichen Funktionen zuweisbar ist und wobei jedes Integritätsschutzprofil Sicherheitsmaßnamen zum Schützen einer Hardware und einer Software der Hardwareeinrichtung gegen Manipulationen definiert;
Auswählen eines Integritätsschutzprofils aus den mehreren Integritätsschutzprofilen als ein ausgewähltes Integritätsschutzprofil unter Berücksichtigung einer durch die Hardwareeinrichtung durchzuführende Funktion aus den mehreren unterschiedlichen Funktionen; und
Durchführen der Sicherheitsmaßnamen des ausgewählten Integritätsschutzprofils.

Ferner wird gemäß einer Ausführungsform eine Hardwareeinrichtung, die zum Durchführen von mehreren unterschiedlichen Funktionen geeignet ist, vorgeschlagen. Die Hardwareeinrichtung umfasst:
eine Speichereinrichtung zum Speichern von mehreren Integritätsschutzprofilen für die Hardwareeinrichtung, wobei jedes Integritätsschutzprofil einer der mehreren unterschiedlichen Funktionen zuweisbar ist und wobei jedes Integritätsschutzprofil Sicherheitsmaßnamen zum Schützen einer Hardware und einer Software der Hardwareeinrichtung gegen Manipulationen definiert;
eine Bestimmungseinrichtung zum Bestimmen eines ausgewählten Integritätsschutzprofils, das aus den mehreren Integritätsschutzprofilen unter Berücksichtigung einer durch die Hardwareeinrichtung durchzuführende Funktion aus den mehreren unterschiedlichen Funktionen ausgewählt wurde; und
eine Sicherheitseinrichtung zum Durchführen der Sicherheitsmaßnamen des ausgewählten Integritätsschutzprofils.

Die Hardwareeinrichtung ist insbesondere geeignet, gemäß dem zuvor und im Folgenden beschriebenen Verfahren betrieben zu werden. Der Begriff "Betreiben" umfasst sowohl das Herstellen der Hardwareeinrichtung, als auch die Konfiguration und die Nutzung der Hardwareeinrichtung.

Die Hardwareeinrichtung kann ein Feldgerät, ein Internet-der-Dinge-Gerät, ein Steuergerät oder dergleichen sein. Insbesondere ist die Hardwareeinrichtung ein eingebettetes System. Die Hardwareeinrichtung umfasst insbesondere einen Hardware- und einen Softwareteil. Der Softwareteil, im Folgenden auch "Software", kann z.B. ausführbaren Code sowie in der Hardwareeinrichtung gespeicherte Daten umfassen. Der Hardwareteil, im Folgenden auch "Hardware", kann z.B. ein Gehäuse der Hardwareeinrichtung sowie einen physikalischen Speicher der Hardwareeinrichtung umfassen.

Die Hardwareeinrichtung kann insbesondere dazu geeignet sein, unterschiedliche Funktionen durchzuführen. Mögliche Funktionen können zum Beispiel ein Steuern, Speichern oder ein Berechnen umfassen. Beispielsweise kann die Hardwareeinrichtung sowohl als Server als auch als Client für ein Netzwerk ausführbar sein.

Der Hardwareeinrichtung können mehrere Integritätsschutzprofile zugordnet sein, die jeweils Sicherheitsmaßnamen zum Schützen sowohl der Hardware als auch der Software definieren. Diese sind in der Speichereinrichtung, welche insbesondere als ein nicht flüchtiger Datenspeicher ausgebildet ist, gespeichert. Insbesondere dienen die Sicherheitsmaßnamen der jeweiligen Integritätsschutzprofile zum Integritätsschutz der Hardwareeinrichtung. Unter Integritätsschutz der Hardwareeinrichtung kann beispielsweise ein Verhindern und/oder Erkennen von Manipulationen und/oder Angriffe auf die Hardwareeinrichtung durch böswillige und/oder unbefugte Nutzer verstanden werden.

Die Integritätsschutzprofile können den unterschiedlichen Funktionen zugeordnet sein oder unabhängig von den Funktionen sein. Zudem können die Integritätsschutzprofile sich z.B. durch ihr Sicherheitsniveau, z.B. "hoch", "mittel", "niedrig" voneinander unterscheiden.

Aus den Integritätsschutzprofilen kann in Abhängigkeit der Funktion, die die Hardwareeinrichtung durchführen soll, das ausgewählte Integritätsschutzprofil ausgewählt werden. Falls die Hardwareeinrichtung beispielsweise in einer Umgebung, die eine hohe Sicherheit erfordert, eingesetzt werden soll, z.B. als ein Schlüsselspeicher, kann ein Integritätsschutzprofil ausgewählt werden, welches einen hohen Integritätsschutz der Hardwareeinrichtung gewährleistet. Falls die Hardwareeinrichtung in einer Umgebung eingesetzt wird, in der die Integrität der Hardwareeinrichtung nicht maßgebend ist, z.B. in einem Testaufbau oder in einem zugangsgeschützten Bereich, kann ein Integritätsschutzprofil ausgewählt werden, welches einen geringen Integritätsschutz der Hardwareeinrichtung gewährleistet.

Das Integritätsschutzprofil kann bereits bei der Herstellung, insbesondere bei einer Projektierung, ausgewählt und/oder unveränderbar festgelegt werden. Ferner ist es möglich, das Integritätsschutzprofil während des Benutzens oder Betreibens der Hardwareeinrichtung beliebig zu verändern.

Der Integritätsschutz der Hardwareeinrichtung kann durch die Sicherheitsmaßnamen des ausgewählten Integritätsschutzprofils bestimmt werden. Das Durchführen der Sicherheitsmaßnamen kann dazu dienen, die Integrität der Hardwareeinrichtung zu schützen. Insbesondere kann der Integritätsschutz der Hardwareeinrichtung flexibel konfiguriert werden. Dadurch kann die Sicherheit der Hardwareeinrichtung erhöht werden.

Durch die geeignete Auswahl des Integritätsschutzprofils kann ferner z.B. verhindert werden, dass rechnerisch aufwendige Sicherheitsmaßnamen, die insbesondere bei hohem Integritätsschutz üblich sind, durchgeführt werden, obwohl sie nicht erforderlich sind. Der Integritätsschutz der Hardwareeinrichtung kann in Hinblick auf eine Verwendung und/oder Funktion der Hardwareeinrichtung angepasst werden.

Gemäß einer Ausführungsform umfasst das Durchführen der Sicherheitsmaßnamen zumindest:
Durchführen eines sicheren Starts der Hardwareeinrichtung;
Prüfen der Korrektheit von Daten, die in der Hardwareeinrichtung gespeichert sind;
Prüfen von in der Hardwareeinrichtung laufenden Prozessen;
Durchführen eines "Mandatory Access Control" in der Hardwareeinrichtung;
Virtualisierung von Betriebssystemressourcen und/oder Hardwareressourcen;
Ermitteln, ob eine Manipulation auf die Hardwareeinrichtung erfolgt; und/oder
Überwachen von Tampersensoren der Hardwareeinrichtung, die physikalische Eigenschaften der Hardwareeinrichtung erfassen.

Durch das Durchführen der Sicherheitsmaßnahmen kann die Integrität der Hardwareeinrichtung geschützt werden. Beispielsweise können die Sicherheitsmaßnamen Voraussetzungen für einen sicheren Start der Hardwareeinrichtung definieren, sodass die Hardwareeinrichtung mit Hilfe der Sicherheitsmaßnamen sicher gestartet werden kann. Insbesondere kann als Teil des Integritätsschutzes beim Start der Hardwareeinrichtung die Signatur der Firmware überprüft werden, sodass nur korrekt signierte Firmware beim Start geladen wird.

Ferner kann als Teil des Integritätsschutzes die Korrektheit von Daten, die in der Hardwareeinrichtung gespeichert sind, geprüft werden. Dies umfasst sowohl Daten, die hardwareeinrichtungsspezifisch sind, als auch Daten, die auf einem in der Hardwareeinrichtung fest verbauten oder entfernbaren Speicher abgelegt sind. Insbesondere wird eine Integrität und/oder Unverändertheit der gespeicherten Daten im laufenden Betrieb geprüft. Hierzu können Hash-Werte der gespeicherten Daten gebildet werden und mit in der Hardwareeinrichtung gespeicherten Referenzwerten auf Übereinstimmung geprüft werden.

Zudem können die in der Hardwareeinrichtung laufenden Prozesse als Teil des Integritätsschutzes geprüft werden. Insbesondere kann die Hardwareeinrichtung erkennen, wenn ein Prozess läuft, der gemäß einer vorgespeicherten weißen Liste nicht zulässig ist.

Als Teil des Integritätsschutzes kann auch ein "Mandatory access control", also eine Zugriffskontrolle von Software auf Ressourcen, die von einem Betriebssystem der Hardwareeinrichtung bereitgestellt und/oder verwaltet werden, definiert sein. Solche Ressourcen können z.B. einen Netzwerkschnittstelle oder ein Dateisystem sein. Die Zugriffskontrolle kann beispielsweise mit Hilfe von SELinux, AppArmor, SMACK und/oder TOMOYO erfolgen.

Der Integritätsschutz kann auch die Virtualisierung von Betriebssystemressourcen und/oder Hardwareressourcen, wie z.B. Softwarecontainer oder virtuelle Maschinen, umfassen.

Die virtualisierten Ressourcen stellen beispielsweise eine Nachbildung einer entsprechenden Hard- oder Softwareressource durch ein ähnliches Objekt vom selben Typ mit Hilfe eines Abstraktions-Layers in der Art einer Hardwareabstraktionsschicht dar. Insofern können dann virtuelle Ressourcen flexibel zusammengefasst oder aufgeteilt werden. Mithilfe der virtuellen Ressourcen kann die Hardwareeinrichtung oder deren Funktionen insbesondere geprüft, geschützt und/oder probehalber veränderte werden.

Insbesondere bieten die Betriebssystemressourcen und/oder Hardwareressourcen in ihrer virtualisierten Form auch einen verbesserten konfigurierbaren Schutz. Beispielsweise kann vorgegeben werden, dass nur entsprechende Softwarecontainer ohne Netzwerkzugriff gestartet werden dürfen. Man kann dabei bei einem Softwarecontainer von einer virtuellen Ressource sprechen.

Zudem kann als Teil des Integritätsschutzes ermittelt werden, ob eine Manipulation und/oder ein Angriff auf die Hardwareeinrichtung erfolgt. Die Ermittlung, ob eine Manipulation und/oder ein Angriff erfolgt, kann mit Hilfe der zuvor und im Folgenden beschriebenen Überwachungen und/oder Überprüfungen, z.B. mit Hilfe des Prüfens der laufenden Prozesse, erfolgen.

Ferner können als Teil des Integritätsschutzes Tampersensoren der Hardwareeinrichtung überwacht werden. Diese Tampersensoren messen insbesondere physikalische Eigenschaften der Hardware, wie z.B. Vibrationen des Gehäuses, Bewegungen des Gehäuses und/oder Geräusche an der Hardwareeinrichtung. Dadurch kann die Hardwareeinrichtung auch gegen physikalische Angriffe, z.B. gegen ein Öffnen oder Bewegen des Gehäuses, geschützt werden. Zudem können Schwellwerte, die von Tampersensoren überwacht werden, abhängig vom ausgewählten Integritätsschutzprofil festgelegt werden. Insbesondere wird durch die Schwellwerte bestimmt, wie "empfindlich" die Tampersensoren sind.

Gemäß einer weiteren Ausführungsform umfasst das Durchführen der Sicherheitsmaßnahmen eine logische und eine physikalische Überwachung der Hardwareeinrichtung.

Insbesondere dient der durch das ausgewählte Integritätsschutzprofil vorgegebene Integritätsschutz sowohl zur logischen Integritätsüberwachung der Hardwareeinrichtung auf Softwareebene, als auch zur physikalischen Integritätsüberwachung, auch Tamperüberwachung, der Hardwareeinrichtung auf Hardwareebene. Der logische Integritätsschutz und der physikalische Integritätsschutz sind hierbei insbesondere in einem durch das ausgewählte Integritätsschutzprofil einheitlich gebildeten Gesamtkonzept integriert, wodurch logische und physikalische Integritätsschutzverfahren zusammenwirken können, um einen hohen durchgängigen Schutz der Integrität der Hardwareeinrichtung zu gewährleisten.

Gemäß einer weiteren Ausführungsform umfasst das Verfahren ferner:
Speichern von Verifikationsdaten in der Hardwareeinrichtung;
Empfangen von Authentifizierungsdaten durch die Hardwareeinrichtung von einem Nutzer, der ein Integritätsschutzprofil aus den mehreren Integritätsschutzprofilen auswählen will;
Ermitteln, ob die Authentifizierungsdaten mit den Verifikationsdaten übereinstimmen; und
falls die Authentifizierungsdaten mit den Verifikationsdaten übereinstimmen, Zulassen der Auswahl des Integritätsschutzprofils.

Für die Auswahl und/oder Nutzung des ausgewählten Integritätsschutzprofils kann erforderlich sein, dass der Nutzer sich mit Authentifizierungsdaten bei der Hardwareeinrichtung authentifiziert. Die Authentifizierungsdaten können z.B. ein gerätespezifischer Konfigurationscode sein, der aus einer Zahlenfolge besteht. Die Authentifizierungsdaten können auch nutzerspezifische Daten sein, die zur Authentifizierung des Nutzers, z.B. von Servicepersonal, dienen. In Ausführungsformen sind die Authentifizierungsdaten als ein Lizenzcode zu verstehen.

Falls die Authentifizierungsdaten mit den in der Hardwareeinrichtung gespeicherten Verifikationsdaten übereinstimmen, insbesondere falls diese miteinander identisch sind, wird die Auswahl des Integritätsschutzprofils durch die Hardwareeinrichtung zugelassen. Insbesondere können die durch die Integritätsschutzprofile definierten Integritätsschutzverfahren freigeschaltet werden, ein Deaktivieren eines Integritätsschutzprofils kann zugelassen werden und/oder ein Wechseln eines Integritätsschutzprofils kann zugelassen werden.

In Ausführungsformen wird die Auswahl des Integritätsschutzprofils nicht zugelassen, falls die empfangenen Authentifizierungsdaten nicht mit den Verifikationsdaten übereinstimmen.

Eine Änderung des Integritätsschutzprofils ist insbesondere nur möglich, wenn die korrekten Authentifizierungsdaten empfangen werden. Dadurch kann die Hardwareeinrichtung geschützt werden, weil nur zugelassene Nutzer das Integritätsschutzprofil der Hardwareeinrichtung auswählen und/oder verändern können. Insbesondere wird verhindert, dass eine Integritätsüberwachung auf unerwünschte Weise deaktiviert wird, welches die Sicherheit der Hardwareeinrichtung gefährden würde.

Gemäß einer weiteren Ausführungsform umfasst das Verfahren ferner:
falls ermittelt wird, dass eine Manipulation auf die Hardwareeinrichtung erfolgt, Ausführen einer Notfunktion durch die Hardwareeinrichtung, wobei die Notfunktion umfasst:
Ausgeben eines Meldesignals;
Ausschalten der Hardwareeinrichtung;
Durchführen eines Notlaufprogramms;
Löschen von in der Hardwareeinrichtung gespeicherte Daten;
Deaktivieren der Hardwareeinrichtung;
Deaktivieren von Schnittstellen der Hardwareeinrichtung; und/oder
Anzeigen der Manipulation der Hardwareeinrichtung über einen Meldekontakt.

Die Hardwareeinrichtung ist insbesondere geeignet, eine Manipulation und/oder einen Angriff auf die Hardwareeinrichtung zu erkennen und beim Erkennen der Manipulation und/oder des Angriffs im Rahmen der Notfunktion geeignete Maßnahmen durchzuführen, um die Manipulation und/oder den Angriff zu signalisieren und die Auswirkungen der Manipulation und/oder des Angriffs in Grenzen zu halten. Die geeigneten Maßnahmen können hierbei Teil der Sicherheitsmaßnahmen des ausgewählten Integrationsschutzprofils sein.

Das Durchführen der Notfunktion kann dazu führen, dass die Hardwareeinrichtung das Meldesignal ausgibt. Das Meldesignal kann ein Alarm sein. Ferner kann das Meldesignal eine Warnung sein. Das Meldesignal kann zudem von der Hardwareeinrichtung an eine Überwachungseinrichtung geschickt werden, um dieser die erkannte Manipulation zu signalisieren.

Ferner kann die Notfunktion die Hardwareeinrichtung ausschalten und/oder deaktivieren, sodass die Manipulation verhindert werden kann. Es kann zudem das Notlaufprogramm in der Hardwareeinrichtung durchgeführt werden. Das Notlaufprogramm ist beispielsweise ein Programm, welches nur die notwendigen Funktionen der Hardwareeinrichtung durchführt und sensible Funktionen der Hardwareeinrichtung einstellt. Dadurch können die Auswirkungen der Manipulation und/oder des Angriffs in Grenzen gehalten werden, und die Sicherheit der Hardwareeinrichtung kann gewährleistet werden.

Weiterhin können in der Hardwareeinrichtung gespeicherten Daten, insbesondere sicherheitsrelevante Daten, aus der Hardwareeinrichtung gelöscht werden. Dadurch kann verhindert werden, dass ein unbefugter Nutzer, der die Manipulation durchführt, die in der Hardwareeinrichtung gespeicherten Daten abliest und/oder kopiert.

Durch das Deaktivieren von Schnittstellen der Hardwareeinrichtung kann ferner verhindert werden, dass der unbefugte Nutzer über diese Schnittstellen die Hardwareeinrichtung manipuliert, insbesondere in der Hardwareeinrichtung gespeicherte Daten ausliest.

Zudem kann die Hardwareeinrichtung die Manipulation über einen Meldekontakt anzeigen. Insbesondere kann auf dem Meldekontakt angezeigt werden, welche Integritätsverletzungen erkannt werden.

Gemäß einer weiteren Ausführungsform wird ein Computerprogrammprodukt, welches auf einer programmgesteuerten Einrichtung die Durchführung des zuvor und im Folgenden beschriebenen Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einer weiteren Ausführungsform ist die Hardwareeinrichtung ein eingebettetes System.

Gemäß einer weiteren Ausführungsform umfasst die Hardwareeinrichtung ferner eine Auswahleinrichtung zum Auswählen des ausgewählten Integritätsschutzprofils, wobei die Auswahleinrichtung als eine Schnittstelle der Hardwareeinrichtung, als ein Schalter und/oder als ein Codiermodul ausgebildet ist.

Die Schnittstelle der Hardwareeinrichtung kann beispielsweise eine Tastatur, eine Internet-Schnittstelle und/oder ein Display sein, über welche Auswahldaten zur Auswahl des Integritätsschutzprofils eingegeben werden können. Die Auswahldaten können der Hardwareeinrichtung auch z.B. über Ethernet, IP, WLAN, ZigBee, IEEE 802.15.4 oder Bluetooth bereitgestellt werden.

Der Schalter kann z.B. ein DIP-Schalter oder ein Jumper sein. Die Auswahl des Integritätsschutzprofils kann in Abhängigkeit von dem gesteckten Jumper und/oder von dem gesteckten DIP-Schalter erfolgen.

Zudem kann die Auswahl des Integritätsschutzprofils in Abhängigkeit von dem gesteckten Codiermodul erfolgen.

Gemäß einer weiteren Ausführungsform umfasst die Hardwareeinrichtung zumindest eine erste und eine zweite Einheit, wobei
die Integritätsschutzprofile erste und zweite Integritätsschutzprofile umfassen;
die ersten Integritätsschutzprofile der ersten Einheit zugeordnet sind, wobei jedes erste Integritätsschutzprofil erste Sicherheitsmaßnahmen zum Schützen einer Hardware und einer Software der ersten Einheit gegen Manipulationen definiert;
wobei die zweiten Integritätsschutzprofile der zweiten Einheit zugeordnet sind, wobei jedes zweite Integritätsschutzprofil erste Sicherheitsmaßnahmen zum Schützen einer Hardware und einer Software der zweiten Einheit gegen Manipulationen definiert;
wobei die Bestimmungseinrichtung eine erste Bestimmungseinrichtung zum Auswählen eines ersten Integritätsschutzprofils aus den mehreren ersten Integritätsschutzprofilen als ein ausgewähltes erstes Integritätsschutzprofil und eine zweite Bestimmungseinrichtung zum Auswählen eines zweiten Integritätsschutzprofils aus den mehreren zweiten Integritätsschutzprofilen als ein ausgewähltes zweites Integritätsschutzprofil umfasst; und
wobei die Sicherheitseinrichtung eingerichtet ist, die Sicherheitsmaßnamen des ausgewählten ersten Integritätsschutzprofils in der ersten Einheit und die Sicherheitsmaßnamen des ausgewählten zweiten Integritätsschutzprofils in der zweiten Einheit durchzuführen.

Die erste und zweite Einheit können Teile der Hardwareeinrichtung sein, denen jeweils eigene Integritätsschutzprofile zugeordnet sind. Die Integrität der ersten und zweiten Einheit kann unabhängig voneinander geschützt werden. Es kann zudem sichergestellt werden, dass jede der Einheiten richtig konfiguriert ist, insbesondere im Hinblick auf von der Einheit durchzuführende Funktionen. Dadurch kann die Sicherheit der einzelnen Einheiten erhöht werden, sowie auch die gesamte Sicherheit der Hardwareeinrichtung.

In Ausführungsformen umfasst die Hardwareeinrichtung weitere Einheiten, z.B. eine dritte und vierte Einheit, welche auswählbare weitere Integritätsschutzprofile umfassen, die zum Schützen der weiteren Einheiten geeignet sein.

Die für das vorgeschlagene Verfahren zum Betreiben der Hardwareeinrichtung beschriebenen Ausführungsformen und Merkmale gelten für die vorgeschlagene Hardwareeinrichtung entsprechend.

Gemäß einer weiteren Ausführungsform wird ein Verfahren zum Herstellen einer Hardwareeinrichtung vorgeschlagen, welches die Verfahrensschritte des zuvor und im Folgenden beschriebenen Verfahrens umfasst.

Insbesondere kann die Auswahl des Integritätsschutzprofils bereits während der Herstellung der Hardwareeinrichtung erfolgen. Das Integritätsschutzprofil kann z.B. unveränderbar während der Herstellung der Hardwareeinrichtung festgelegt werden. In diesem Fall können alle nicht ausgewählten Integritätsschutzprofile gelöscht werden.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der Hardwareeinrichtung, dem Verfahren zum Betreiben der Hardwareeinrichtung und dem Verfahren zum Herstellen der Hardwareeinrichtung hinzufügen.

Weitere vorteilhafte Ausgestaltungen und Aspekte der Erfindung sind Gegenstand der Unteransprüche sowie der im Folgenden beschriebenen Ausführungsbeispiele. Im Weiteren werden bevorzugte Ausführungsformen unter Bezugnahme auf die beigelegten Figuren näher erläutert.
- Fig. 1: zeigt eine Hardwareeinrichtung gemäß einer ersten Ausführungsform;
- Fig. 2: zeigt ein Verfahren zum Betreiben einer Hardwareeinrichtung gemäß einer ersten Ausführungsform;
- Fig. 3: zeigt ein Verfahren zum Betreiben einer Hardwareeinrichtung gemäß einer zweiten Ausführungsform; und
- Fig. 4: zeigt eine Hardwareeinrichtung gemäß einer zweiten Ausführungsform.

In den Figuren sind gleiche oder funktionsgleiche Elemente mit denselben Bezugszeichen versehen worden, sofern nichts anderes angegeben ist.

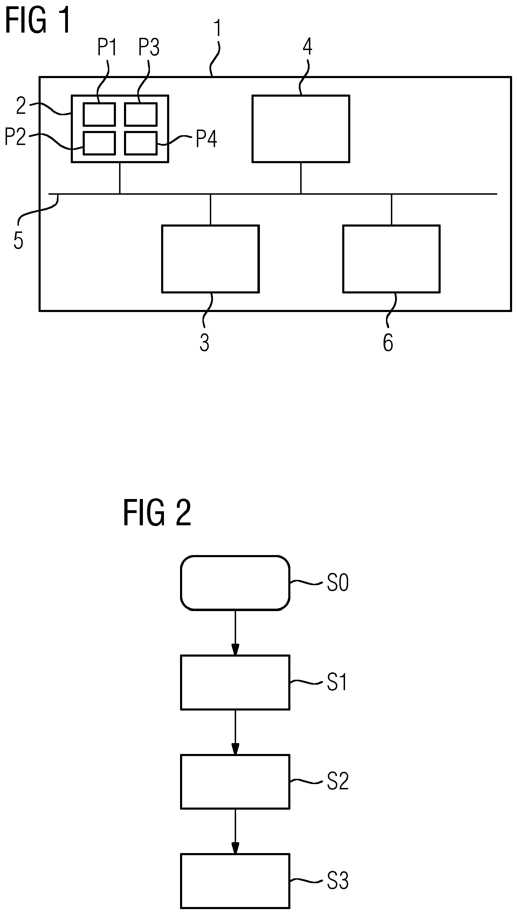

Die Fig. 1 zeigt eine Hardwareeinrichtung 1 gemäß einer ersten Ausführungsform. Die Hardwareeinrichtung 1 umfasst eine Speichereinrichtung 2, eine Bestimmungseinrichtung 3, eine Sicherheitseinrichtung 4 und eine Schnittstelle 6, welche über einen internen Bus 5 miteinander verbunden sind.

Die Hardwareeinrichtung 1 ist derart konzipiert, dass sie mehrere unterschiedliche Funktionen durchführen kann. Die Funktionen umfassen hier ein Steuern von Feldgeräten in einer Industrieanlage und ein Speichern von feldgerätrelevanten Daten.

In der Speichereinrichtung 2, welche als ein nicht flüchtiger RAM-Speicher ausgeführt ist, sind mehrere Integritätsschutzprofile P1 - P4 gespeichert. Die Integritätsschutzprofile P1 - P4 definieren jeweils unterschiedliche Sicherheitsmaßnahmen zum Schützen einer Hardware und einer Software der Hardwareeinrichtung 1.

Die Integritätsschutzprofile P1 und P2 sind besonders geeignet, die Hardwareeinrichtung 1 zu schützen, falls diese zum Steuern der Feldgeräte in der Industrieanlage eingesetzt wird. Das Integritätsschutzprofil P1 ist hierbei sicherer als das Integritätsschutzprofil P2 aber rechentechnisch aufwendiger durchzuführen.

Die Integritätsschutzprofile P3 und P4 sind besonders geeignet, die Hardwareeinrichtung 1 zu schützen, falls diese zum Speichern der feldgerätrelevanten Daten eingesetzt wird. Das Integritätsschutzprofil P3 ist hierbei sicherer als das Integritätsschutzprofil P4 aber rechentechnisch aufwendiger durchzuführen.

Die Hardwareeinrichtung 1 ist geeignet, gemäß einem in der Fig. 2 dargestellten Verfahren zum Betreiben einer Hardwareeinrichtung 1 gemäß einer ersten Ausführungsform betrieben zu werden. Das Verfahren wird im Folgenden in Bezug auf die Fig. 1 und 2 beschrieben.

In einem Vorbereitungsschritt S0 wird die in der Fig. 1 dargestellte Hardwareeinrichtung 1 bereitgestellt. In einem Schritt S1 werden die mehreren Integritätsschutzprofile P1 - P4 in der Speichereinrichtung 2 gespeichert. Das Speichern der Integritätsschutzprofile P1 - P4 erfolgt bei der Herstellung der Hardwareeinrichtung 1.

In einem Schritt S2 wird ein Integritätsschutzprofil aus den mehreren Integritätsschutzprofilen P1 - P4 als ein ausgewähltes Integritätsschutzprofil ausgewählt. Die Auswahl des ausgewählten Integritätsschutzprofils erfolgt durch einen nicht dargestellten Nutzer der Hardwareeinrichtung 1 über die Schnittstelle 6. Die Schnittstelle 6 ist hier ein Touchscreen, der die zur Auswahl stehenden Integritätsschutzprofile P1 - P4 anzeigt. Der Nutzer wählt das ausgewählte Integritätsschutzprofil über den Touchscreen 6 aus. Die Auswahl des ausgewählten Integritätsschutzprofils erfolgt unter Berücksichtigung der Funktion, die die Hardwareeinrichtung 1 durchführen soll. Falls die Hardwareeinrichtung 1 zum Steuern der Feldgeräte in der Industrieanlage eingesetzt werden soll, werden bevorzugt die Integritätsschutzprofile P1 oder P2 ausgewählt. Falls die Hardwareeinrichtung 1 zum Speichern der feldgerätrelevanten Daten eingesetzt werden soll, werden bevorzugt die Integritätsschutzprofile P3 oder P4 ausgewählt. In der Hardwareeinrichtung 1 wirkt sich die Auswahl des Integritätsschutzprofils dadurch aus, dass die Bestimmungseinrichtung 3 das ausgewählte Integritätsschutzprofil aus den Integritätsschutzprofilen P1 - P4 bestimmt, und dieses der Sicherheitseinrichtung 4 zur Verfügung stellt.

In einem Schritt S3 werden die Sicherheitsmaßnahmen des ausgewählten Integritätsschutzprofils durch die Sicherheitseinrichtung 4 durchgeführt. Das Durchführen der Sicherheitsmaßnahmen umfasst das Durchführen eines sicheren Starts der Hardwareeinrichtung 1.

Das durchzuführende Integritätsschutzprofil kann aus den Integritätsschutzprofilen P1 - P4 ausgewählt werden, sodass es für die durch die Hardwareeinrichtung 1 durchzuführende Funktion optimal ist. Dadurch wird die Integrität der Hardwareeinrichtung 1 geschützt und die Sicherheit der Hardwareeinrichtung wird erhöht.

Die Schritte SO, S1, S2 und S3 können auch im Rahmen eines Verfahrens zum Herstellen der Hardwareeinrichtung 1 durchgeführt werden, sodass das ausgewählte Integritätsschutzprofil bereits während der Herstellung der Hardwareeinrichtung 1 ausgewählt wird.

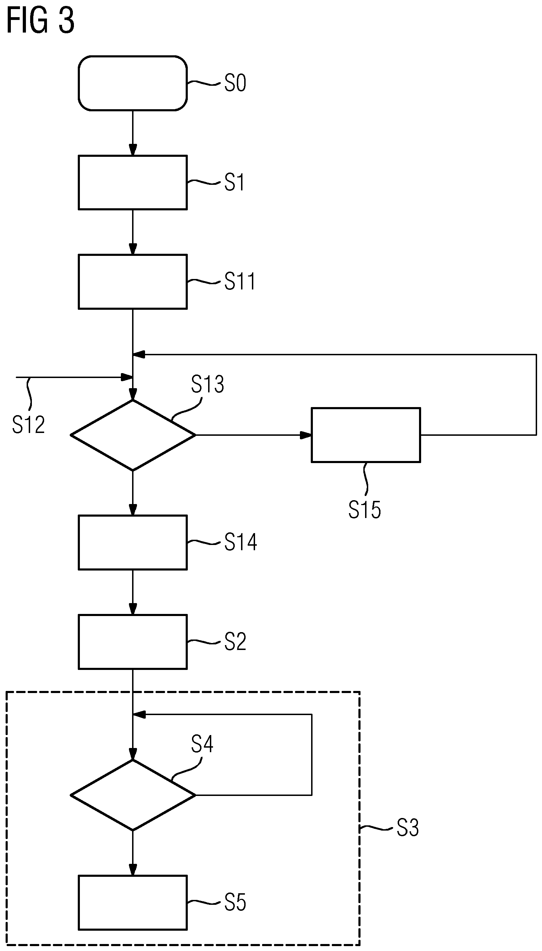

Die Hardwareeinrichtung 1 ist ferner geeignet, gemäß einem in der Fig. 3 dargestellten Verfahren zum Betreiben einer Hardwareeinrichtung 1 gemäß einer zweiten Ausführungsform betrieben zu werden. Das Verfahren gemäß der zweiten Ausführungsform ist eine Erweiterung des Verfahrens gemäß der ersten Ausführungsform und wird im Folgenden in Bezug auf die Fig. 1 und 3 beschrieben.

Zunächst werden die bereits beschriebenen Schritte S0 und S1 durchgeführt. In einem Schritt S11 werden Verifikationsdaten in der Hardwareeinrichtung 1 gespeichert. Diese werden bei der Herstellung der Hardwareeinrichtung 1 in der Speicherheinrichtung 2 gespeichert. Die Verifikationsdaten sind als eine Zahlenfolge ausgebildet.

In einem Schritt S12 empfängt die Hardwareeinrichtung 1 Authentifizierungdaten von dem Nutzer, der ein Integritätsschutzprofil für die Hardwareeinrichtung 1 auswählen möchte, über die Schnittstelle 6. Die Authentifizierungsdaten sind eine Zahlenfolge, die der Nutzer als Passwort in die Hardwareeinrichtung 1 eingibt, um ein Integritätsschutzprofil P1 - P4 auswählen zu dürfen.

In einem Schritt S13 ermittelt die Hardwareeinrichtung 1, ob die empfangenen Authentifizierungsdaten mit den gespeicherten Verifikationsdaten übereinstimmen. Falls die empfangenen Authentifizierungsdaten mit den gespeicherten Verifikationsdaten übereinstimmen, lässt die Hardwareeinrichtung 1 in einem Schritt S14 die Auswahl eines Integritätsschutzprofils P1 - P4 zu. Das heißt, die Hardwareeinrichtung 1 autorisiert den Nutzer, ein Integritätsschutzprofil P1 - P4 auszuwählen.

Falls die empfangenen Authentifizierungsdaten allerdings nicht mit den gespeicherten Verifikationsdaten übereinstimmen, unterbindet die Hardwareeinrichtung 1 in einem Schritt S15 die Auswahl eines Integritätsschutzprofils P1 - P4. Der Nutzer kann in diesem Fall das Integritätsschutzprofil P1 - P4 nicht ändern, bevor er nicht die richtigen Authentifizierungsdaten eingibt. In dem Schritt S15 wird zusätzlich über die Schnittstelle 6 eine Warnmeldung an den Nutzer ausgegeben.

Falls die Auswahl des Integritätsschutzprofils P1 - P4 in dem Schritt S14 zugelassen wird, werden die bereits beschriebenen Schritte S2 und S3 durchgeführt.

Der Schritt S3 umfasst in der in der Fig. 3 dargestellten Ausführungsform die Schritte S4 und S5. In dem Schritt S4 ermittelt die Hardwareeinrichtung 1 mit Hilfe der Sicherheitsmaßnahmen des ausgewählten Integritätsschutzprofils, ob eine Manipulation auf die Hardwareeinrichtung 1 erfolgt. Hierzu prüft die Hardwareeinrichtung 1 mit Hilfe der Sicherheitsmaßnahmen die in der Hardwareeinrichtung 1 laufende Prozesse und die Integrität von in der Hardwareeinrichtung 1 gespeicherten Daten. Dadurch wird die Integrität der Software der Hardwareeinrichtung 1 geprüft.

Zudem überwacht die Hardwareeinrichtung 1 mit Hilfe der Sicherheitsmaßnahmen nicht dargestellte Tampersensoren der Hardwareeinrichtung 1. Die Tampersensoren umfassen eine Bohrschutzfolie. Dadurch können auch physikalische Integritätsverletzungen erkannt werden.

Der Schritt S4 wird periodisch durchgeführt, solange keine Manipulation erkannt wird. Falls in dem Schritt S4 eine Manipulation ermittelt wird, wird in dem Schritt S5 eine durch die Sicherheitsmaßnahmen des ausgewählten Integritätsschutzprofils definierte Notfunktion durchgeführt. Beim Durchführen der Notfunktion werden alle in der Hardwareeinrichtung 1 gespeicherten Daten gelöscht, wodurch die Sicherheit der Hardwareeinrichtung 1 gewährleistet wird.

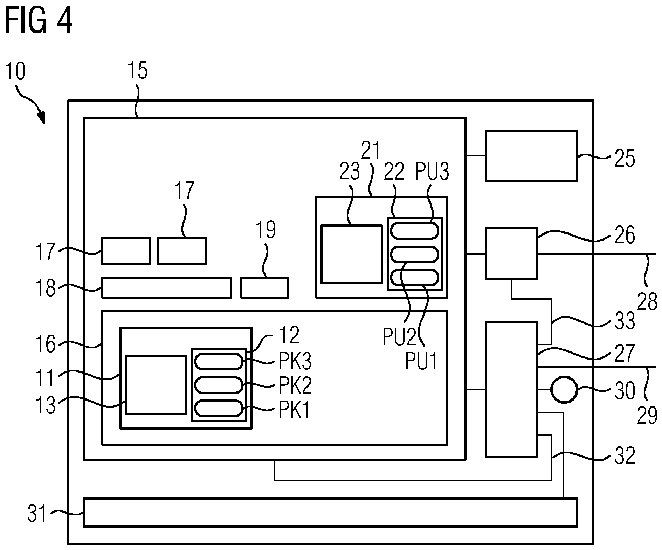

Die Fig. 4 zeigt eine Hardwareeinrichtung 10 gemäß einer zweiten Ausführungsform.

Die Hardwareeinrichtung 10 ist ein eingebettetes Linux-System. Die Hardwareeinrichtung 10 umfasst eine Prozessoreinheit 15, einen Konfigurationsspeicher 25 zum Speichern von Auswahldaten für ein Integritätsschutzprofil, eine Netzwerkschnittstelle 26 zum Austausch von Daten mit Feldgeräten über eine Ethernet-Verbindung 28, eine Ein-/Ausgabeschnittstelle 27 zum Ansprechen von Peripheriebausteinen, wie die Netzwerkschnittstelle 26 und Tampersensoren 30, und eine Energieversorgung 31 zum Versorgen der Hardwareeinrichtung 10 mit Strom.

Die Prozessoreinheit 15 ist geeignet, Container-Anwendungen 17, die durch einen Laufzeit-Engine 18 ("Runtime Engine, RTE") implementiert werden, sowie reguläre Nutzeranwendungen 19 durchzuführen.

Die Prozessoreinheit 15 umfasst einen Linux-Kernel 16 mit einem Kernelintegritätsmonitor 11 als eine erste Einheit. Der Kernelintegritätsmonitor 11 umfasst eine erste Speichereinrichtung 12, in der Kernelintegritätsschutzprofile PK1 - PK3 als erste Integritätsschutzprofile gespeichert sind. Die Kernelintegritätsschutzprofile PK1 - PK3 umfassen Sicherheitsmaßnahmen zum Schützen der Software und Hardware des Kernelintegritätsmonitors 11. Ferner umfasst der Kernelintegritätsmonitor 11 eine erste Bestimmungseinrichtung 13.

Die Prozessoreinheit 15 umfasst zudem einen Nutzerintegritätsmonitor 21 als eine zweite Einheit mit einer zweiten Speichereinrichtung 22, in der Nutzerintegritätsschutzprofile PU1 - PU3 als zweite Integritätsschutzprofile gespeichert sind, und mit einer zweiten Bestimmungseinrichtung 23. Die Nutzerintegritätsschutzprofile PU1 - PU3 umfassen Sicherheitsmaßnahmen zum Schützen der Software und Hardware des Nutzerintegritätsmonitors 21.

Die Hardwareeinrichtung 10 ist geeignet, gemäß den Verfahren aus den Fig. 2 und 3 betrieben zu werden. Die in Bezug auf die Fig. 1 bis 3 beschriebenen Verfahrensschritte werden hierbei separat für den Kernelintegritätsmonitor 11 und den Nutzerintegritätsmonitor 21 durchgeführt. Hierbei erfolgt insbesondere eine Auswahl des Kernelintegritätsschutzprofils PK1 - PK3 unabhängig von einer Auswahl des Nutzerintegritätsschutzprofils PU1 - PU3. Auch sind zum Zulassen der Auswahl des Kernelintegritätsschutzprofils PK1 - PK3 und des Nutzerintegritätsschutzprofils PU1 - PU3 in dem Kernelintegritätsmonitor 11 und in dem Nutzerintegritätsmonitor 21 unterschiedliche Verifikationsdaten gespeichert, die mit unterschiedlichen empfangenen Authentifizierungsdaten übereinstimmen müssen.

Im Folgenden wird das Betreiben der Hardwareeinrichtung 10 in Bezug auf die Fig. 2 und 4 beschrieben.

In dem Schritt S0 wird die Hardwareeinrichtung 10 bereitgestellt. In dem Schritt S1 werden die Kernelintegritätsschutzprofile PK1 - PK3 in der ersten Speichereinrichtung 12 und die Nutzerintegritätsschutzprofile PU1 - PU3 in der zweiten Speichereinrichtung 22 gespeichert.

In dem Schritt S2 wird jeweils ein Integritätsschutzprofil aus den Kernelintegritätsschutzprofilen PK1 - PK3 und aus den Nutzerintegritätsschutzprofilen PU1 - PU3 ausgewählt. Zur Auswahl erhalten der Kernelintegritätsmonitor 11 und der Nutzerintegritätsmonitor 21 jeweils Auswahldaten von dem Konfigurationsspeicher 25, welcher ein EEPROM-Speicher ist. Die erste und zweite Bestimmungseinrichtung 13, 23 bestimmen unter Berücksichtigung der empfangenen Auswahldaten das ausgewählte Kernelintegritätsschutzprofil und das ausgewählte Nutzerintegritätsschutzprofil.

In dem Schritt S3 werden die Sicherheitsmaßnahmen, die durch das ausgewählte Kernelintegritätsschutzprofil vorgegeben sind, zum Schutz der Integrität von Kernelressourcen durch den Kernelintegritätsmonitor 11 durchgeführt, und die Sicherheitsmaßnahmen, die durch das ausgewählte Nutzerintegritätsschutzprofil vorgegeben sind, zum Schutz der Integrität von Nutzerressourcen durch den Nutzerintegritätsmonitor 21 durchgeführt.

Im Rahmen des Integritätsschutzes durch den Kernelintegritätsmonitor 11 und durch den Nutzerintegritätsmonitor 21 wird mit Hilfe der jeweiligen Maßnahmen ermittelt, ob bestimmte Prozesse, z.B. eine bestimmte Container-Anwendungen 17, laufen dürfen oder nicht.

Zudem kann erkannt werden, ob eine Manipulation auf die Hardwareeinrichtung 10 erfolgt. Hierzu werden in der Hardwareeinrichtung 10 laufende Prozesse geprüft und die Tampersensoren 30 werden überwacht. Die Tampersensoren 30 umfassen eine Bohrschutzfolie und einen Bewegungssensor.

Falls eine Manipulation erkannt wird, wird die Netzwerkschnittstelle 26 über ein Schnittstellenkabel 33 deaktiviert und die Prozessoreinheit 15 wird über ein Resetkabel 32 zurückgesetzt, wobei die in der Prozessoreinheit 15 gespeicherten Daten gelöscht werden. Zudem wird beim Erkennen der Manipulation über die Ein-/Ausgabeschnittstelle 27 ein Schaltsignal über einen Meldekontakt 29 ausgegeben.

Obwohl die vorliegende Erfindung anhand von Ausführungsbeispielen beschrieben wurde, ist sie vielfältig modifizierbar. Die Hardwareeinrichtung kann eine beliebige Einrichtung, wie zum Beispiel ein Feldgerät, sein. Die Anzahl an Integritätsschutzprofilen, die in der Hardwareeinrichtung gespeichert sind, ist beliebig wählbar. Die Sicherheitsmaßnahmen, die durch die Integritätsschutzprofile definiert sind, können beliebig erweitert werden. Ferner kann die Hardwareeinrichtung eine beliebige Anzahl an Einheiten aufweisen, die jede mit einem einheitsspezifischen Integritätsschutzprofil, das aus einer Vielzahl von einheitsspezifischen Integritätsschutzprofilen ausgewählt wurde, geschützt werden.

## Patentansprüche

1. Verfahren zum Betreiben einer Hardwareeinrichtung (1, 10), die zum Durchführen von mehreren unterschiedlichen Funktionen geeignet ist, umfassend:
Speichern (S1), in der Hardwareeinrichtung (1, 10), von mehreren Integritätsschutzprofilen (P1 - P4) für die Hardwareeinrichtung (1, 10), wobei jedes Integritätsschutzprofil (P1 - P4) einer der mehreren unterschiedlichen Funktionen zuweisbar ist und wobei jedes Integritätsschutzprofil (P1 - P4) Sicherheitsmaßnamen zum Schützen einer Hardware der Hardwareeinrichtung (1, 10) gegen Manipulationen definiert;
Auswählen (S2) eines Integritätsschutzprofils aus den mehreren Integritätsschutzprofilen (P1 - P4) als ein ausgewähltes Integritätsschutzprofil über eine Schnittstelle (6) unter Berücksichtigung einer durch die Hardwareeinrichtung (1, 10) durchzuführenden Funktion aus den mehreren unterschiedlichen Funktionen; und
Durchführen (S3) der Sicherheitsmaßnamen des ausgewählten Integritätsschutzprofils;
**dadurch gekennzeichnet, dass** das Durchführen der Sicherheitsmaßnamen zumindest umfasst:
Überwachen von Tampersensoren (30) der Hardwareeinrichtung (1, 10), die physikalische Eigenschaften der Hardwareeinrichtung (1, 10) erfassen.

2. Verfahren nach Anspruch 1, wobei jedes Integritätsschutzprofil (P1 - P4) ferner Sicherheitsmaßnamen zum Schützen einer Software der Hardwareeinrichtung (1, 10) gegen Manipulationen definiert.

3. Verfahren nach Anspruch 2, wobei das Durchführen der Sicherheitsmaßnamen zumindest umfasst:
Durchführen eines sicheren Starts der Hardwareeinrichtung (1, 10);
Prüfen der Korrektheit von Daten, die in der Hardwareeinrichtung (1, 10) gespeichert sind;
Prüfen von in der Hardwareeinrichtung (1, 10) laufenden Prozessen;
Durchführen eines "Mandatory Access Control" in der Hardwareeinrichtung (1, 10);
Virtualisierung von Betriebssystemressourcen und/oder Hardwareressourcen; und/oder
Ermitteln (S4), ob eine Manipulation auf die Hardwareeinrichtung (1, 10) erfolgt.

4. Verfahren nach einem der Ansprüche 1 bis 3, wobei das Durchführen der Sicherheitsmaßnahmen eine logische und eine physikalische Überwachung der Hardwareeinrichtung (1, 10) umfasst.

5. Verfahren nach einem der Ansprüche 1 bis 4, welches ferner umfasst:
Speichern (S11) von Verifikationsdaten in der Hardwareeinrichtung (1, 10);
Empfangen (S12) von Authentifizierungsdaten durch die Hardwareeinrichtung (1, 10) von einem Nutzer, der ein Integritätsschutzprofil aus den mehreren Integritätsschutzprofilen (P1 - P4) auswählen will;
Ermitteln (S13), ob die Authentifizierungsdaten mit den Verifikationsdaten übereinstimmen; und
falls die Authentifizierungsdaten mit den Verifikationsdaten übereinstimmen, Zulassen (S14) der Auswahl des Integritätsschutzprofils.

6. Verfahren nach einem der Ansprüche 1 bis 5, welches ferner umfasst:
falls ermittelt wird, dass eine Manipulation auf die Hardwareeinrichtung (1, 10) erfolgt, Ausführen (S5) einer Notfunktion durch die Hardwareeinrichtung (1, 10), wobei die Notfunktion umfasst:
Ausgeben eines Meldesignals;
Ausschalten der Hardwareeinrichtung (1, 10);
Durchführen eines Notlaufprogramms;
Löschen von in der Hardwareeinrichtung (1, 10) gespeicherte Daten;
Deaktivieren der Hardwareeinrichtung (1, 10);
Deaktivieren von Schnittstellen (6, 26, 27) der Hardwareeinrichtung (1, 10); und/oder
Anzeigen der Manipulation der Hardwareeinrichtung (1, 10) über einen Meldekontakt (29).

7. Verfahren nach einem der Ansprüche 1 bis 6, wobei das Auswählen (S2) des Integritätsschutzprofils während einer Herstellung der Hardwareeinrichtung (1, 10) erfolgt.

8. Hardwareeinrichtung (1, 10), die zum Durchführen von mehreren unterschiedlichen Funktionen geeignet ist,
umfassend:
eine Speichereinrichtung (2) zum Speichern von mehreren Integritätsschutzprofilen (P1 - P4) für die Hardwareeinrichtung (1, 10), wobei jedes Integritätsschutzprofil (P1 - P4) einer der mehreren unterschiedlichen Funktionen zuweisbar ist und wobei jedes Integritätsschutzprofil (P1 - P4) Sicherheitsmaßnamen zum Schützen einer Hardware der Hardwareeinrichtung (1, 10) gegen Manipulationen definiert;
eine Bestimmungseinrichtung (3) zum Bestimmen eines ausgewählten Integritätsschutzprofils, das aus den mehreren Integritätsschutzprofilen (P1 - P4) unter Berücksichtigung einer durch die Hardwareeinrichtung (1, 10) durchzuführenden Funktion über eine Schnittstelle (6) aus den mehreren unterschiedlichen Funktionen ausgewählt wurde; und
eine Sicherheitseinrichtung (4) zum Durchführen der Sicherheitsmaßnamen des ausgewählten Integritätsschutzprofils;
**dadurch gekennzeichnet, dass** das Durchführen der Sicherheitsmaßnamen zumindest ein Überwachen von Tampersensoren (30) der Hardwareeinrichtung (1, 10), die physikalische Eigenschaften der Hardwareeinrichtung (1, 10) erfassen, umfasst.

9. Hardwareeinrichtung nach Anspruch 8, welche dazu eingerichtet ist, das Verfahren nach einem der Ansprüche 1 bis 6 durchzuführen.

10. Hardwareeinrichtung nach Anspruch 8 oder 9, welche ein eingebettetes System ist.

11. Hardwareeinrichtung nach einem der Ansprüche 8 bis 10, welche ferner eine Auswahleinrichtung zum Auswählen des ausgewählten Integritätsschutzprofils umfasst, wobei die Auswahleinrichtung als eine Schnittstelle (6, 26) der Hardwareeinrichtung (1, 10), als ein Schalter und/oder als ein Codiermodul ausgebildet ist.

12. Hardwareeinrichtung nach einem der Ansprüche 8 bis 9 mit zumindest einer ersten und einer zweiten Einheit (11, 21), wobei
die Integritätsschutzprofile (P1 - P4) erste und zweite Integritätsschutzprofile (PK1 - PK3, PU1 - PU3) umfassen;
die ersten Integritätsschutzprofile (PK1 - PK3) der ersten Einheit (11) zugeordnet sind, wobei jedes erste Integritätsschutzprofil (PK1 - PK3) erste Sicherheitsmaßnahmen zum Schützen einer Hardware der ersten Einheit (11) gegen Manipulationen definiert;
wobei die zweiten Integritätsschutzprofile (PU1 - PU3) der zweiten Einheit (21) zugeordnet sind, wobei jedes zweite Integritätsschutzprofil (PU1 - PU3) zweite Sicherheitsmaßnahmen zum Schützen einer Hardware der zweiten Einheit (21) gegen Manipulationen definiert;
wobei die Bestimmungseinrichtung (3) eine erste Bestimmungseinrichtung (13) zum Auswählen eines ersten Integritätsschutzprofils aus den mehreren ersten Integritätsschutzprofilen (PK1 - PK3) als ein ausgewähltes erstes Integritätsschutzprofil und eine zweite Bestimmungseinrichtung (23) zum Auswählen eines zweiten Integritätsschutzprofils aus den mehreren zweiten Integritätsschutzprofilen (PU1 - PU3) als ein ausgewähltes zweites Integritätsschutzprofil umfasst; und
wobei die Sicherheitseinrichtung (4) eingerichtet ist, die Sicherheitsmaßnamen des ausgewählten ersten Integritätsschutzprofils in der ersten Einheit (11) und die Sicherheitsmaßnamen des ausgewählten zweiten Integritätsschutzprofils in der zweiten Einheit (21) durchzuführen.

13. Hardwareeinrichtung nach einem der Ansprüche 8 bis 12, wobei jedes Integritätsschutzprofil (P1 - P4), jedes erste Integritätsschutzprofil (PK1 - PK3) und/oder jedes zweite Integritätsschutzprofil (PU1 - PU3) ferner Sicherheitsmaßnamen zum Schützen einer Software der Hardwareeinrichtung (1, 10) gegen Manipulationen definiert.

14. Computerprogrammprodukt, welches auf einer Hardwareeinrichtung nach einem der Ansprüche 8 bis 13 die Durchführung des Verfahrens nach einem der Ansprüche 1 bis 7 veranlasst.

## Claims

1. Method for operating a hardware device (1, 10) which is suitable for performing a plurality of different functions, comprising:
storing (S1), in the hardware device (1, 10), a plurality of integrity protection profiles (P1-P4) for the hardware device (1, 10), wherein each integrity protection profile (P1-P4) can be assigned to one of the plurality of different functions, and wherein each integrity protection profile (P1-P4) defines security measures for protecting hardware of the hardware device (1, 10) from manipulations;
selecting (S2) an integrity protection profile from the plurality of integrity protection profiles (P1-P4) as a selected integrity protection profile via an interface (6) taking into account a function from the plurality of different functions which is to be performed by the hardware device (1, 10); and
performing (S3) the security measures in the selected integrity protection profile;
**characterized in that** the performance of the security measures at least comprises:
monitoring tamper sensors (30) of the hardware device (1, 10) which capture physical properties of the hardware device (1, 10).

2. Method according to Claim 1, wherein each integrity protection profile (P1-P4) also defines security measures for protecting software of the hardware device (1, 10) from manipulations.

3. Method according to Claim 2, wherein the performance of the security measures at least comprises:
performing a safe start of the hardware device (1, 10);
checking the correctness of data stored in the hardware device (1, 10);
checking processes running in the hardware device (1, 10) ;
performing "mandatory access control" in the hardware device (1, 10);
virtualizing operating system resources and/or hardware resources; and/or
determining (S4) whether the hardware device (1, 10) has been manipulated.

4. Method according to one of Claims 1 to 3, wherein the performance of the security measures comprises logical and physical monitoring of the hardware device (1, 10).

5. Method according to one of Claims 1 to 4, which also comprises:
storing (S11) verification data in the hardware device (1, 10);
receiving (S12) authentication data by means of the hardware device (1, 10) from a user wishing to select an integrity protection profile from the plurality of integrity protection profiles (P1-P4);
determining (S13) whether the authentication data correspond to the verification data; and
if the authentication data correspond to the verification data, allowing (S14) the selection of the integrity protection profile.

6. Method according to one of Claims 1 to 5, which also comprises:
if it is determined that the hardware device (1, 10) has been manipulated, carrying out (S5) an emergency function by means of the hardware device (1, 10), wherein the emergency function comprises:
outputting a notification signal;
switching off the hardware device (1, 10);
performing an emergency program;
deleting data stored in the hardware device (1, 10);
deactivating the hardware device (1, 10);
deactivating interfaces (6, 26, 27) of the hardware device (1, 10); and/or
indicating the manipulation of the hardware device (1, 10) via a notification contact (29).

7. Method according to one of Claims 1 to 6, wherein the integrity protection profile is selected (S2) during production of the hardware device (1, 10).

8. Hardware device (1, 10) which is suitable for performing a plurality of different functions, comprising:
a storage device (2) for storing a plurality of integrity protection profiles (P1-P4) for the hardware device (1, 10), wherein each integrity protection profile (P1-P4) can be assigned to one of the plurality of different functions, and wherein each integrity protection profile (P1-P4) defines security measures for protecting hardware of the hardware device (1, 10) from manipulations;
a determination device (3) for determining a selected integrity protection profile which has been selected from the plurality of integrity protection profiles (P1-P4) via an interface (6) taking into account a function from the plurality of different functions which is to be performed by the hardware device (1, 10); and
a security device (4) for performing the security measures in the selected integrity protection profile; **characterized in that**
the performance of the security measures at least comprises monitoring tamper sensors (30) of the hardware device (1, 10) which capture physical properties of the hardware device (1, 10) .

9. Hardware device according to Claim 8, which is set up to perform the method according to one of Claims 1 to 6.

10. Hardware device according to Claim 8 or 9, which is an embedded system.

11. Hardware device according to one of Claims 8 to 10, which also comprises a selection device for selecting the selected integrity protection profile, wherein the selection device is in the form of an interface (6, 26) of the hardware device (1, 10), in the form of a switch and/or in the form of a coding module.

12. Hardware device according to one of Claims 8 to 9, having at least a first and a second unit (11, 21), wherein
the integrity protection profiles (P1-P4) comprise first and second integrity protection profiles (PK1-PK3, PU1-PU3);
the first integrity protection profiles (PK1-PK3) are assigned to the first unit (11), wherein each first integrity protection profile (PK1-PK3) defines first security measures for protecting hardware of the first unit (11) from manipulations;
wherein the second integrity protection profiles (PU1-PU3) are assigned to the second unit (21), wherein each second integrity protection profile (PU1-PU3) defines second security measures for protecting hardware of the second unit (21) from manipulations;
wherein the determination device (3) comprises a first determination device (13) for selecting a first integrity protection profile from the plurality of first integrity protection profiles (PK1-PK3) as a selected first integrity protection profile and a second determination device (23) for selecting a second integrity protection profile from the plurality of second integrity protection profiles (PU1-PU3) as a selected second integrity protection profile; and
wherein the security device (4) is set up to perform the security measures in the selected first integrity protection profile in the first unit (11) and to perform the security measures in the selected second integrity protection profile in the second unit (21).

13. Hardware device according to one of Claims 8 to 12, wherein each integrity protection profile (P1-P4), each first integrity protection profile (PK1-PK3) and/or each second integrity protection profile (PU1-PU3) also define(s) security measures for protecting software of the hardware device (1, 10) from manipulations.

14. Computer program product which causes the method according to one of Claims 1 to 7 to be performed on a hardware device according to one of Claims 8 to 13.

## Revendications

1. Procédé d'exploitation d'un dispositif matériel (1, 10) qui est approprié pour exécuter une pluralité de fonctions différentes, comprenant :
la mise en mémoire (S1) dans le dispositif matériel (1, 10), d'une pluralité de profils de protection d'intégrité (P1 - P4) pour le dispositif matériel (1, 10), dans lequel chaque profil de protection d'intégrité (P1 - P4) peut être attribué à une de la pluralité de fonctions différentes et dans lequel chaque profil de protection d'intégrité (P1 - P4) définit des mesures de sécurité pour protéger un matériel du dispositif matériel (1, 10) contre les manipulations ;
la sélection (S2) d'un profil de protection d'intégrité à partir de la pluralité de profils de protection d'intégrité (P1 - P4) en tant qu'un profil de protection d'intégrité sélectionné, par le biais d'une interface (6) en tenant compte d'une fonction à exécuter par le dispositif matériel (1, 10) à partir de la pluralité de fonctions différentes ; et
l'exécution (S3) des mesures de sécurité du profil de protection d'intégrité sélectionné ;
**caractérisé en ce que** l'exécution des mesures de sécurité comprend au moins :
la surveillance de capteurs de fraude (30) du dispositif matériel (1, 10) qui détectent des propriétés physiques du dispositif matériel (1, 10).

2. Procédé selon la revendication 1, dans lequel chaque profil de protection d'intégrité (P1 - P4) définit en outre des mesures de sécurité pour protéger un logiciel du dispositif matériel (1, 10) contre les manipulations.

3. Procédé selon la revendication 2, dans lequel l'exécution des mesures de sécurité comprend au moins :
l'exécution d'un démarrage sûr du dispositif matériel (1, 10) ;
la vérification de l'exactitude de données qui sont en mémoire dans le dispositif matériel (1, 10) ;
la vérification de procédés en cours dans le dispositif matériel (1, 10) ;
l'exécution d'un « mandatory access control » dans le dispositif matériel (1, 10) ;
la virtualisation de ressources du système d'exploitation et/ou de ressources matérielles ; et/ou
la détermination (S4) si une manipulation a lieu sur le dispositif matériel (1, 10).

4. Procédé selon l'une des revendications 1 à 3, dans lequel l'exécution des mesures de sécurité comprend une surveillance logique et physique du dispositif matériel (1, 10).

5. Procédé selon l'une des revendications 1 à 4, lequel comprend en outre :
la mise en mémoire (S11) de données de vérification dans le dispositif matériel (1, 10) ;
la réception (S12) de données d'authentification, par le dispositif matériel (1, 10), d'un utilisateur qui veut sélectionner un profil de protection d'intégrité à partir de la pluralité de profils de protection d'intégrité (P1 - P4) ;
la détermination (S13) si les données d'authentification coïncident avec les données de vérification ; et
si les données d'authentification coïncident avec les données de vérification, l'autorisation (S14) de la sélection du profil de protection d'intégrité.

6. Procédé selon l'une des revendications 1 à 5, lequel comprend en outre :
s'il est déterminé qu'une manipulation a lieu sur le dispositif matériel (1, 10), l'exécution (S5) d'une fonction d'urgence par le dispositif matériel (1, 10), dans lequel la fonction d'urgence comprend :
l'émission d'un signal d'avertissement ;
l'arrêt du dispositif matériel (1, 10) ;
l'exécution d'un programme de marche d'urgence ;
l'effacement de données mises en mémoire dans le dispositif matériel (1, 10) ;
la désactivation du dispositif matériel (1, 10) ;
la désactivation d'interfaces (6, 26, 27) du dispositif matériel (1, 10) ; et/ou
l'affichage de la manipulation du dispositif matériel (1, 10) par le biais d'un contact de signalement (29).

7. Procédé selon l'une des revendications 1 à 6, dans lequel la sélection (S2) du profil de protection d'intégrité a lieu pendant une fabrication du dispositif matériel (1, 10).

8. Dispositif matériel (1, 10) qui est approprié pour exécuter une pluralité de fonctions différentes, comprenant :
un dispositif de mémoire (2) pour mettre en mémoire une pluralité de profils de protection d'intégrité (P1 - P4) pour le dispositif matériel (1, 10), dans lequel chaque profil de protection d'intégrité (P1 - P4) peut être attribué à une de la pluralité de fonctions différentes et dans lequel chaque profil de protection d'intégrité (P1 - P4) définit des mesures de sécurité pour protéger un matériel du dispositif matériel (1, 10) contre les manipulations ;
un dispositif de détermination (3) pour déterminer un profil de protection d'intégrité sélectionné qui a été sélectionné à partir de la pluralité de profils de protection d'intégrité (P1 - P4) en tenant compte d'une fonction à exécuter par le dispositif matériel (1, 10) par le biais d'une interface (6) à partir de la pluralité de fonctions différentes ; et
un dispositif de sécurité (4) pour exécuter les mesures de sécurité du profil de protection d'intégrité sélectionné,
**caractérisé en ce que**
l'exécution des mesures de sécurité comprend au moins une surveillance de capteurs de fraude (30) du dispositif matériel (1, 10) qui détectent des propriétés physiques du dispositif matériel (1, 10).

9. Dispositif matériel selon la revendication 8, qui est conçu pour exécuter le procédé selon l'une des revendications 1 à 6.

10. Dispositif matériel selon la revendication 8 ou 9, qui est un système intégré.

11. Dispositif matériel selon l'une des revendications 8 à 10, lequel comprend en outre un dispositif de sélection pour sélectionner le profil de protection d'intégrité sélectionné, dans lequel le dispositif de sélection est conçu en tant qu'une interface (6, 26) du dispositif matériel (1, 10), en tant qu'un interrupteur et/ou en tant qu'un module de codage.

12. Dispositif matériel selon l'une des revendications 8 à 9 comprenant au moins une première et une seconde unité (11, 21), dans lequel
les profils de protection d'intégrité (P1 - P4) comprennent des premiers et seconds profils de protection d'intégrité (PK1 - PK3, PU1 - PU3) ;
les premiers profils de protection d'intégrité (PK1 - PK3) sont attribués à la première unité (11), dans lequel chaque premier profil de protection d'intégrité (PK1 - PK3) définit des premières mesures de sécurité pour protéger un matériel de la première unité (11) contre des manipulations ;
dans lequel les seconds profils de protection d'intégrité (PU1 - PU3) sont attribués à la seconde unité (21), dans lequel chaque second profil de protection d'intégrité (PU1 - PU3) définit des secondes mesures de sécurité pour protéger un matériel de la seconde unité (21) contre des manipulations ;
dans lequel le dispositif de détermination (3) comprend un premier dispositif de détermination (13) pour sélectionner un premier profil de protection d'intégrité à partir de la pluralité de premiers profils de protection d'intégrité (PK1 - PK3) en tant qu'un premier profil de protection d'intégrité sélectionné et un second dispositif de détermination (23) pour sélectionner un second profil de protection d'intégrité à partir de la pluralité de seconds profils de protection d'intégrité (PU1 - PU3) en tant qu'un second profil de protection d'intégrité sélectionné ; et
dans lequel le dispositif de sécurité (4) est conçu pour exécuter les mesures de sécurité du premier profil de protection d'intégrité sélectionné dans la première unité (11) et les mesures de sécurité du second profil de protection d'intégrité sélectionné dans la seconde unité (21).

13. Dispositif matériel selon l'une des revendications 8 à 12, dans lequel chaque profil de protection d'intégrité (P1 - P4), chaque premier profil de protection d'intégrité (PK1 - PK3) et/ou chaque second profil de protection d'intégrité (PU1 - PU3) définit en outre des mesures de sécurité pour protéger un logiciel du dispositif matériel (1, 10) contre les manipulations.

14. Produit de programme informatique, lequel déclenche l'exécution du procédé selon l'une des revendications 1 à 7 sur un dispositif matériel selon l'une des revendications 8 à 13.
